(19) Europäisches Patentamt
European Patent Office
Office européen des brevets

(11) EP 3 974 504 B1

(12) **EUROPEAN PATENT SPECIFICATION**

(45) Date of publication and mention of the grant of the patent:
**26.07.2023 Bulletin 2023/30**

(21) Application number: **20199021.5**

(22) Date of filing: **29.09.2020**

(51) International Patent Classification (IPC):
***C11D 1/66*** *(2006.01)* ***C08L 39/06*** *(2006.01)*
***C11D 3/37*** *(2006.01)* ***C11D 11/00*** *(2006.01)*

(52) Cooperative Patent Classification (CPC):
**C11D 1/66; C11D 3/3776; C11D 11/0023;**
C08L 39/06

(54) **AUTOMATIC DISHWASHING CLEANING COMPOSITION**

REINIGUNGSZUSAMMENSETZUNG ZUM AUTOMATISCHEN GESCHIRRSPÜLEN

COMPOSITION DE NETTOYAGE POUR LAVE-VAISSELLE AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.03.2022 Bulletin 2022/13**

(73) Proprietor: **The Procter & Gamble Company**
**Cincinnati, OH 45202 (US)**

(72) Inventors:
- **DELPLANCKE, Patrick Firmin August**
  **1853 Strombeek-Bever (BE)**
- **VAN ELSEN, Katrien Andrea Lieven**
  **1853 Strombeek-Bever (BE)**
- **FULLER, Linsey Sarah**
  **Newcastle upon Tyne, NE12 9TS (GB)**
- **LUKIC, Nevena**
  **1853, Strombeek-Bever, Brussels (BE)**

(74) Representative: **P&G Patent Belgium UK**
**N.V. Procter & Gamble Services Company S.A.**
**Temselaan 100**
**1853 Strombeek-Bever (BE)**

(56) References cited:
**EP-A2- 1 779 896 WO-A1-2008/110816**

- **Ashland: "Performance Specialties Reference Guide", , 2 December 2020 (2020-12-02), pages 1-72, XP055783796, Retrieved from the Internet: URL:https://www.brenntag.com/media/documents/bsi/product_data_sheets/material_science/ashland_polymers/performance_specialties_reference_guide.pdf [retrieved on 2021-03-09]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The present invention relates to a cleaning composition, in particular an automatic dishwashing cleaning composition comprising a terpolymer capable of providing drying through the wash (i.e., a drying aid is provided during the main wash and the washed load presents improved drying at the end of the automatic dishwashing operation).

BACKGROUND OF THE INVENTION

One of the unmet dishwasher user needs is the drying of cleaned items after the automatic dishwashing operation. At the end of an automatic dishwashing operation, items, in particular plastic items, are usually wet. They need to be dried by the user before they can be put away. This requires an extra step. Dishwasher's users always like to minimise the amount of work needed from when items are soiled until when the items are put away in the cupboards. Different proposals have been put forward to improve drying in the dishwashing process. WO 2008/110816 proposes the use of certain anionic polyesters to provide drying. WO 2009/033972 proposes a composition comprising a specific non-ionic surfactant in combination with a sulfonated polymer. WO 2009/033830 proposes a dishwashing process involving delivery of surfactant and anionic polymers at two different moments in time. WO 2008/119834 proposes a composition comprising specific polycarbonate-, polyurethane- and/or polyurea-polyorganosiloxane compounds. WO2009/027456 discloses esterified alkyl alkoxylates as low foaming agents in dishwasher cleaning formulations. EP2333039A1 provides an automatic dishwashing composition comprising an esterified alkyl alkoxylated surfactant to provide drying through the wash. However, some compositions that are good for drying can give rise to machine filter residues, especially when heavily soiled loads are washed.

Rinse aid could help with the drying of items, however this implies the purchase and use of an extra product and as we pointed out before dishwasher's users likes to simplify the dishwashing task as much as possible.

The objective of this invention is to provide an automatic dishwashing composition that provides good drying through the wash (i.e. it does not need the addition of a separate product in the rise cycle) and at the same time provides good cleaning and finishing of the washed items and that avoid the formation of filter residues. Another objective is to enable more environmentally friendly dishwashing processes, ie. processes that involve reduced amount of time and/or reduced amount of energy, as for example reduced drying time.

SUMMARY OF THE INVENTION

According to the first aspect of the invention, there is provided an automatic dishwashing cleaning composition. The composition comprises a combination of a non-ionic surfactant and a terpolymer and enzymes.

The terpolymer comprises monomers of (meth)acrylic acid, monomers of linear or branched C1-C20 alkyl (meth)acrylate and monomers of vinylpyrrolidone. The composition provides good drying, even on plastic items and prevent filming and spotting thereby providing good shine on glass, metal and plastic items. The composition also prevents soil deposition on the filter of the dishwasher.

According to the second aspect of the invention, there is provided a method of dishwashing, using the composition of the invention. Dishware cleaned according to the method of the invention is left dry and with a reduced filming and spots and shiny.

According to the last aspect of the invention, there is provided the use of the composition of the invention to provide drying through the wash in automatic dishwashing.

The elements of the composition of the invention described in connection with the first aspect of the invention apply *mutatis mutandis* to the second and third aspects of the invention.

DETAILED DESCRIPTION OF THE INVENTION

The present invention encompasses an automatic dishwashing cleaning composition, comprising a non-ionic surfactant and a terpolymer. The composition provides improved drying and greatly reduces filming and spotting on glass, metal and plastic and provides excellent cleaning and shine. The invention also encompasses a method of automatic dishwashing to provide drying through the wash, using the composition of the invention and the use of the composition to provide drying through the wash in automatic dishwashing.

For the purpose of this invention "dishware" encompasses tableware, cookware and any food-holding/handling items used for meal preparation, cooking and/or eating. Dishware is usually made of ceramic, stainless steel, plastic or glass.

Automatic dishwashing cleaning composition

The automatic dishwashing cleaning composition can be in any physical form. It can be a loose powder, a gel or presented in unit dose form. Preferably it is in unit dose form, unit dose forms include pressed tablets and water-soluble packs. The automatic dishwashing cleaning composition of the invention is preferably presented in unit-dose form and it can be in any physical form including solid, liquid and gel form. The composition of the invention is very well suited to be presented in the form of a multi-compartment pack, more in particular a multi-compartment pack comprising compartments with compositions in different physical forms, for example a compartment comprising a composition in solid form and another compartment comprising a composition in liquid form. The composition is preferably enveloped by a water-soluble film such as polyvinyl alcohol. Especially preferred are compositions in unit dose form wrapped in a polyvinyl alcohol film having a thickness of less than 100 $\mu$m. The detergent composition of the invention weighs from about 8 to about 25 grams, preferably from about 10 to about 20 grams. This weight range fits comfortably in a dishwasher dispenser. Even though this range amounts to a low amount of detergent, the detergent has been formulated in a way that provides all the benefits mentioned herein above. Alternatively, the composition can be provided in a pack comprising a plurality of doses and the cleaning composition can be autodosed into the dishwasher.

The composition is preferably phosphate free. By "phosphate-free" is herein understood that the composition comprises less than 1%, preferably less than 0.1% by weight of the composition of phosphate.

Terpolymer

The terpolymer of the invention comprises monomers of a vinyl lactam, monomers of (meth)acrylic acid and monomers of a linear or branched C1-C20 alkyl (meth)acrylate. Preferably, the terpolymer comprises monomers of vinylpyrrolidone, monomers of acrylic acid and monomers of a linear or branched C1-C20 alkyl (meth)acrylate. Preferably, the terpolymer comprises: i) from about 20% to about 90%, preferably from about 40 to about 70% by weight of vinylpyrrolidone, ii) from about 1 to about 55%, preferably from about 15 to 40% by weight of (meth)acrylic acid; and iii) from about 1 to about 25%, preferably from about 5 to about 20% by weight of a linear or branched C1-C20 alkyl (meth)acrylate. Preferably, the terpolymer has a weight average molecular weight of from about 10000 $gmol^{-1}$ to about 2000000 $gmol^{-1}$ as measured via appropriate techniques. A preferred linear or branched C1-C20 alkyl (meth)acrylate is lauryl methacrylate. Terpolymers suitable for use herein include Styleze 2000 and Acrylidone LM, both provided by Ashland. Preferably, the composition of the invention comprises from about 0.1% to about 10%, preferably from about 0.2% to about 5% by weight of the composition of terpolymer. The terpolymer of the invention can be made by precipitation polymerization as described in WO 91/00302 A1.

Non-ionic surfactant

Surfactants suitable for use herein include non-ionic surfactants, preferably the compositions are free of any other surfactants. Traditionally, non-ionic surfactants have been used in automatic dishwashing for surface modification purposes in particular for sheeting to avoid filming and spotting and to improve shine. It has been found that non-ionic surfactants can also contribute to prevent redeposition of soils.

The composition of the invention comprises a non-ionic surfactant, preeferably a non-ionic surfactant system, more preferably the non-ionic surfactant or a non-ionic surfactant system has a phase inversion temperature, as measured at a concentration of 1% in distilled water, between 20 and 70°C, preferably between 35 and 65°C. By a "non-ionic surfactant system" is meant herein a mixture of two or more non-ionic surfactants. Preferred for use herein are non-ionic surfactant systems. They seem to have improved cleaning and finishing properties and better stability in product than single non-ionic surfactants.

Phase inversion temperature is the temperature below which a surfactant, or a mixture thereof, partitions preferentially into the water phase as oil-swollen micelles and above which it partitions preferentially into the oil phase as water swollen inverted micelles. Phase inversion temperature can be determined visually by identifying at which temperature cloudiness occurs.

The phase inversion temperature of a non-ionic surfactant or system can be determined as follows: a solution containing 1% of the corresponding surfactant or mixture by weight of the solution in distilled water is prepared. The solution is stirred gently before phase inversion temperature analysis to ensure that the process occurs in chemical equilibrium. The phase inversion temperature is taken in a thermostable bath by immersing the solutions in 75 mm sealed glass test tube. To ensure the absence of leakage, the test tube is weighed before and after phase inversion temperature measurement. The temperature is gradually increased at a rate of less than 1°C per minute, until the temperature reaches a few degrees below the pre-estimated phase inversion temperature. Phase inversion temperature is determined visually at the first sign of turbidity.

Suitable nonionic surfactants include: i) ethoxylated non-ionic surfactants prepared by the reaction of a monohydroxy alkanol or alkyphenol with 6 to 20 carbon atoms with preferably at least 3 moles particularly preferred at least 5 moles, and still more preferred at least 7 moles of ethylene oxide per mole of alcohol or alkylphenol; ii) alcohol alkoxylated surfactants having from 6 to 20 carbon atoms and at least one ethoxy and propoxy group. Preferred for use herein are mixtures of surfactants i) and ii).

Other suitable non-ionic surfactants are epoxy-capped poly(oxyalkylated) alcohols represented by the formula:

R1O[CH2CH(CH3)O]x[CH2CH2O]y[CH2CH(OH)R2] (I)

wherein R1 is a linear or branched, aliphatic hydrocarbon radical having from 4 to 18 carbon atoms; R2 is a linear or branched aliphatic hydrocarbon radical having from 2 to 26 carbon atoms; x is an integer having an average value of from 0.5 to 1.5, more preferably about 1; and y is an integer having a value of at least 15, more preferably at least 20.

Preferably, the surfactant of formula I, has at least about 10 carbon atoms in the terminal epoxide unit [CH2CH(OH)R2]. Suitable surfactants of formula I, according to the present invention, are Olin Corporation's POLY-TERGENT® SLF-18B nonionic surfactants, as described, for example, in WO 94/22800, published October 13, 1994 by Olin Corporation.

Preferably, the non-ionic surfactant is a surfactant system comprising at least two non-ionic surfactants. Preferably at least one of the non-ionic surfactants of the surfactant system is an ethoxylated alcohol which comprises from 5 to 25 moles of ethylene oxide per mole of surfactant, more preferably the surfactant system also comprises an alkoxylated alcohol comprising ethoxy and propoxy groups. Preferably, the weight ratio of the two non-ionic surfactants, i.e. ethoxylated alcohol to alkoxylated alcohol comprising ethoxy and propoxy groups is from 2:1 to 1:2.

The composition of the invention comprises from about 0.1 to about 25% by weight of the composition, more preferably from about 0.5 to about 20% by weight of the composition of non-ionic surfactant.

Complexing agent

Excellent drying and shine benefits are obtained with compositions comprising a dispersant polymer and/or a complexing agent. For the purpose of this invention a "complexing agent" is a compound capable of binding polyvalent ions such as calcium, magnesium, lead, copper, zinc, cadmium, mercury, manganese, iron, aluminium and other cationic polyvalent ions to form a water-soluble complex.

Preferably, the composition of the invention comprises an amino-carboxylated complexing agent, preferably selected from the group consisting of methyl-glycine-diacetic acid (MGDA), its salts and derivatives thereof, glutamic-N,N- diacetic acid (GLDA), its salts and derivatives thereof, iminodisuccinic acid (IDS), its salts and derivatives thereof, carboxy methyl inulin, its salts and derivatives thereof, citric acid its salts and derivatives thereof; and mixtures thereof. Especially preferred complexing agent for use herein is selected from the group consisting of MGDA and salts thereof, especially preferred for use herein is the trisodium salt of MGDA. Preferably, the complexing agent is the trisodium salt of MGDA and the dispersant polymer is a sulfonated polymer, more preferably comprising 2-acrylamido-2-methylpropane sulfonic acid monomer. Mixtures of salts of MGDA and salts of citric acid are also preferred for use herein.

The composition of the invention preferably comprises from 10% to 60%, preferably from 20% to 40%, more preferably from 20% to 35% by weight of the composition of a complexing agent.

Dispersant polymer

The dispersant polymer, if present, is used in any suitable amount from about 0.1% to about 30%, preferably from 0.25% to about 20%, more preferably from 0.5% to 15% by weight of the composition. Sulfonated/carboxylated polymers are particularly suitable for the composition of the invention.

Suitable sulfonated/carboxylated polymers described herein may have a weight average molecular weight of less than or equal to about 100,000 Da, or less than or equal to about 75,000 Da, or less than or equal to about 50,000 Da, or from about 3,000 Da to about 50,000, preferably from about 5,000 Da to about 45,000 Da.

Preferred sulfonated monomers include one or more of the following: 1-acrylamido-1-propanesulfonic acid, 2-acrylamido-2-propanesulfonic acid, 2-acrylamido-2-methyl-1-propanesulfonic acid, 2-methacrylamido-2-methyl-1-propanesulfonic acid, 3- methacrylamido-2-hydroxy-propanesulfonic acid, allylsulfonic acid, methallylsulfonic acid, allyloxybenzenesulfonic acid, methallyloxybenzenesulfonic acid, 2-hydroxy-3- (2-propenyloxy) propanesulfonic acid, 2-methyl-2-propen-1-sulfonic acid, styrenesulfonic acid, vinylsulfonic acid, 3-sulfopropyl, 3-sulfopropyl methacrylate, sulfomethacrylamide, sulfomethylmethacrylamide and mixtures of said acids or their water-soluble salts.

Preferably, the polymer comprises the following levels of monomers: from about 40 to about 90%, preferably from about 60 to about 90% by weight of the polymer of one or more carboxylic acid monomer; from about 5 to about 50%, preferably from about 10 to about 40% by weight of the polymer of one or more sulfonic acid monomer; and optionally from about 1% to about 30%, preferably from about 2 to about 20% by weight of the polymer of one or more

non-ionic monomer. An especially preferred polymer comprises about 70% to about 80% by weight of the polymer of at least one carboxylic acid monomer and from about 20% to about 30% by weight of the polymer of at least one sulfonic acid monomer.

In the polymers, all or some of the carboxylic or sulfonic acid groups can be present in neutralized form, i.e. the acidic hydrogen atom of the carboxylic and/or sulfonic acid group in some or all acid groups can be replaced with metal ions, preferably alkali metal ions and in particular with sodium ions.

The carboxylic acid is preferably (meth)acrylic acid. The sulfonic acid monomer is preferably 2-acrylamido-2-propanesulfonic acid (AMPS).

Preferred commercial available polymers include: Alcosperse 240 and Aquatreat AR 540 supplied by Nouryon; Acumer 3100, Acumer 2000, Acusol 587G and Acusol 588G supplied by Dow. Particularly preferred polymers are Acusol 587G and Acusol 588G supplied by Dow.

Suitable polymers include anionic carboxylic polymer of low molecular weight. They can be homopolymers or copolymers with a weight average molecular weight of less than or equal to about 200,000 g/mol, or less than or equal to about 75,000 g/mol, or less than or equal to about 50,000 g/mol, or from about 3,000 to about 50,000 g/mol, preferably from about 5,000 to about 45,000 g/mol. The dispersant polymer may be a low molecular weight homopolymer of polyacrylate, with an average molecular weight of from 1,000 to 20,000, particularly from 2,000 to 10,000, and particularly preferably from 3,000 to 5,000.

The polymer may be a copolymer of acrylic with methacrylic acid, acrylic and/or methacrylic with maleic acid, and acrylic and/or methacrylic with fumaric acid, with a molecular weight of less than 70,000. Their molecular weight ranges from 2,000 to 80,000 and more preferably from 20,000 to 50,000 and in particular 30,000 to 40,000 g/mol. and a ratio of (meth)acrylate to maleate or fumarate segments of from 30:1 to 1:2.

The polymer may be a copolymer of acrylamide and acrylate having a molecular weight of from 3,000 to 100,000, alternatively from 4,000 to 20,000, and an acrylamide content of less than 50%, alternatively less than 20%, by weight of the dispersant polymer can also be used. Alternatively, such polymer may have a molecular weight of from 4,000 to 20,000 and an acrylamide content of from 0% to 15%, by weight of the polymer.

Polymers suitable herein also include itaconic acid homopolymers and copolymers.

Alternatively, the polymer can be selected from the group consisting of alkoxylated polyalkyleneimines, alkoxylated polycarboxylates, polyethylene glycols, styrene co-polymers, cellulose sulfate esters, carboxylated polysaccharides, amphiphilic graft copolymers and mixtures thereof.

Bleach

The composition of the invention preferably comprises from about 1 to about 30%, more preferably from about 2 to about 25%, even more preferably from about 5 to about 20% of bleach by weight of the composition.

Inorganic and organic bleaches are suitable for use herein. Inorganic bleaches include perhydrate salts such as perborate, percarbonate, perphosphate, persulfate and persilicate salts. The inorganic perhydrate salts are normally the alkali metal salts. The inorganic perhydrate salt may be included as the crystalline solid without additional protection. Alternatively, the salt can be coated. Suitable coatings include sodium sulphate, sodium carbonate, sodium silicate and mixtures thereof. Said coatings can be applied as a mixture applied to the surface or sequentially in layers.

Alkali metal percarbonates, particularly sodium percarbonate is the preferred bleach for use herein. The percarbonate is most preferably incorporated into the products in a coated form which provides in-product stability.

Potassium peroxymonopersulfate is another inorganic perhydrate salt of utility herein.

Typical organic bleaches are organic peroxyacids, especially dodecanediperoxoic acid, tetradecanediperoxoic acid, and hexadecanediperoxoic acid. Mono- and diperazelaic acid, mono- and diperbrassylic acid are also suitable herein. Diacyl and Tetraacylperoxides, for instance dibenzoyl peroxide and dilauroyl peroxide, are other organic peroxides that can be used in the context of this invention.

Further typical organic bleaches include the peroxyacids, particular examples being the alkylperoxy acids and the arylperoxy acids. Preferred representatives are (a) peroxybenzoic acid and its ring-substituted derivatives, such as alkylperoxybenzoic acids, but also peroxy-$\alpha$-naphthoic acid and magnesium monoperphthalate, (b) the aliphatic or substituted aliphatic peroxy acids, such as peroxylauric acid, peroxystearic acid, $\varepsilon$-phthalimidoperoxycaproic acid[phthaloiminoperoxyhexanoic acid (PAP)], o-carboxybenzamidoperoxycaproic acid, N-nonenylamidoperadipic acid and N-nonenylamidopersuccinates, and (c) aliphatic and araliphatic peroxydicarboxylic acids, such as 1,12-diperoxycarboxylic acid, 1,9-diperoxyazelaic acid, diperoxysebacic acid, diperoxybrassylic acid, the diperoxyphthalic acids, 2-decyldiperoxybutane-1,4-dioic acid, N,N-terephthaloyldi(6-aminopercaproic acid).

Bleach Activators

Bleach activators are typically organic peracid precursors that enhance the bleaching action in the course of

cleaning at temperatures of 60° C and below. Bleach activators suitable for use herein include compounds which, under perhydrolysis conditions, give aliphatic peroxoycarboxylic acids having preferably from 1 to 12 carbon atoms, in particular from 2 to 10 carbon atoms, and/or optionally substituted perbenzoic acid. Suitable substances bear O-acyl and/or N-acyl groups of the number of carbon atoms specified and/or optionally substituted benzoyl groups. Preference is given to polyacylated alkylenediamines, in particular tetraacetylethylenediamine (TAED), acylated triazine derivatives, in particular 1,5-diacetyl-2,4-dioxohexahydro-1,3,5-triazine (DADHT), acylated glycolurils, in particular tetraacetylglycoluril (TAGU), N-acylimides, in particular N-nonanoylsuccinimide (NOSI), acylated phenol sulfonates, in particular n-nonanoyl- or isononanoyloxybenzenesulfonate (n- or iso-NOBS), decanoyloxybenzoic acid (DOBA), carboxylic anhydrides, in particular phthalic anhydride, acylated polyhydric alcohols, in particular triacetin, ethylene glycol diacetate and 2,5-diacetoxy-2,5-dihydrofuran and also triethylacetyl citrate (TEAC). If present the composition of the invention comprises from 0.01 to 5%, preferably from 0.2 to 2% by weight of the composition of bleach activator, preferably TAED.

Bleach Catalyst

The composition herein preferably contains a bleach catalyst, preferably a metal containing bleach catalyst. More preferably the metal containing bleach catalyst is a transition metal containing bleach catalyst, especially a manganese or cobalt-containing bleach catalyst.

Bleach catalysts preferred for use herein include manganese triazacyclononane and related complexes; Co, Cu, Mn and Fe bispyridylamine and related complexes; and pentamine acetate cobalt(III) and related complexes.

Preferably the composition of the invention comprises from 0.001 to 0.5%, more preferably from 0.002 to 0.05% of bleach catalyst by weight of the composition. Preferably the bleach catalyst is a manganese bleach catalyst.

Inorganic builder

The composition of the invention preferably comprises an inorganic builder. Suitable inorganic builders are selected from the group consisting of carbonate, silicate and mixtures thereof. Especially preferred for use herein is sodium carbonate. Preferably the composition of the invention comprises from 5 to 50%, more preferably from 10 to 40% and especially from 15 to 30% of sodium carbonate by weight of the composition.

Enzymes

In describing enzyme variants herein, the following nomenclature is used for ease of reference: Original amino acid(s):position(s):substituted amino acid(s). Standard enzyme ILTPAC 1-letter codes for amino acids are used.

Proteases

Suitable proteases include metalloproteases and serine proteases, including neutral or alkaline microbial serine proteases, such as subtilisins (EC 3.4.21.62) as well as chemically or genetically modified mutants thereof. Suitable proteases include subtilisins (EC 3.4.21.62), including those derived from Bacillus, such as Bacillus lentus, B. alkalophilus, B. subtilis, B. amyloliquefaciens, Bacillus pumilus and Bacillus gibsonii.

Especially preferred proteases for the detergent of the invention are polypeptides demonstrating at least 90%, preferably at least 95%, more preferably at least 98%, even more preferably at least 99% and especially 100% identity with the wild-type enzyme from Bacillus lentus, comprising mutations in one or more, preferably two or more and more preferably three or more of the following positions, using the BPN' numbering system and amino acid abbreviations as illustrated in WO00/37627, which is incorporated herein by reference:V68A, N87S, S99D, S99SD, S99A, S101G, S101M, S103A, V104N/I, G118V, G118R, S128L, P129Q, S130A, Y167A, R170S, A194P, V205I and/or M222S.

Most preferably the protease is selected from the group comprising the below mutations (BPN' numbering system) versus either the PB92 wild-type (SEQ ID NO:2 in WO 08/010925) or the subtilisin 309 wild-type (sequence as per PB92 backbone, except comprising a natural variation of N87S).

(i) G1118V + S128L + P129Q + S130A

(ii) S101M + G118V+ S128L + P129Q + S130A

(iii) N76D + N87R + G118R + S128L + P129Q + S130A + S188D + N248R

(iv) N76D + N87R + G118R + S128L + P129Q + S130A + S188D + V244R

(v) N76D + N87R + G118R + S128L + P129Q + S130A

(vi) V68A + N87S + S101G+V104N

Suitable commercially available protease enzymes include those sold under the trade names Savinase®, Polarzyme®, Kannase®, Ovozyme®, Everlase® and Esperase® by Novozymes A/S (Denmark), those sold under the tradename Properase®, Purafect®, Purafect Prime®, Purafect Ox®, FN3®, FN4®, Excellase®, Ultimase® and Purafect OXP® by Genencor International, those sold under the tradename Opticlean® and Optimase® by Solvay Enzymes, those available from Henkel/ Kemira, namely BLAP.

Preferred levels of protease in the product of the invention include from about 0.1 to about 10, more preferably from about 0.5 to about 7 and especially from about 1 to about 6 mg of active protease.

Amylases

Preferred enzyme for use herein includes alpha-amylases, including those of bacterial or fungal origin. Chemically or genetically modified mutants (variants) are included. A preferred alkaline alpha-amylase is derived from a strain of Bacillus, such as Bacillus licheniformis, Bacillus amyloliquefaciens, Bacillus stearothermophilus, Bacillus subtilis, or other Bacillus sp., such as Bacillus sp. NCIB 12289, NCIB 12512, NCIB 12513, DSM 9375 (USP 7,153,818) DSM 12368, DSMZ no. 12649, KSM AP1378 (WO 97/00324), KSM K36 or KSM K38 (EP 1,022,334). Preferred amylases include:

(a) the variants described in US 5,856,164 and WO99/23211, WO 96/23873, WO00/60060 and WO 06/002643, especially the variants with one or more substitutions in the following positions versus the AA560 enzyme listed as SEQ ID No. 12 in WO 06/002643:
9, 26, 30, 33, 82, 37, 106, 118, 128, 133, 149, 150, 160, 178, 182, 186, 193, 195, 202, 214, 231, 256, 257, 258, 269, 270, 272, 283, 295, 296, 298, 299, 303, 304, 305, 311, 314, 315, 318, 319, 320, 323, 339, 345, 361, 378, 383, 419, 421, 437, 441, 444, 445, 446, 447, 450, 458, 461, 471, 482, 484, preferably that also contain the deletions of D183* and G184*.

(b) variants exhibiting at least 95% identity with the wild-type enzyme from Bacillus sp.707 (SEQ ID NO:7 in US 6,093, 562), especially those comprising one or more of the following mutations M202, M208, S255, R172, and/or M261. Preferably said amylase comprises one of M202L or M202T mutations.

Suitable commercially available alpha-amylases include DURAMYL®, LIQUEZYME®, TERMAMYL®, TERMAMYL ULTRA®, NATALASE®, SUPRAMYL®, STAINZYME®, STAINZYME PLUS®, POWERASE®, FUNGAMYL® and BAN® (Novozymes A/S, Bagsvaerd, Denmark), KEMZYM® AT 9000 Biozym Biotech Trading GmbH Wehlistrasse 27b A-1200 Wien Austria, RAPIDASE® , PURASTAR®, ENZYSIZE®, OPTISIZE HT PLUS® and PURASTAR OXAM® (Genencor International Inc., Palo Alto, California) and KAM® (Kao, 14-10 Nihonbashi Kayabacho, 1-chome, Chuo-ku Tokyo 103-8210, Japan). Amylases especially preferred for use herein include NATALASE®, STAINZYME®, STAINZYME PLUS®, POWERASE® and mixtures thereof.

Preferably, the product of the invention comprises at least 0.01 mg, preferably from about 0.05 to about 10, more preferably from about 0.1 to about 6, especially from about 0.2 to about 5 mg of active amylase.

Preferably, the protease and/or amylase of the product of the invention are in the form of granulates, the granulates comprise less than 29% of sodium sulfate by weight of the granulate or the sodium sulfate and the active enzyme (protease and/or amylase) are in a weight ratio of less than 4:1.

Alkoxylated polyalkyleneimine

The composition of the invention preferably comprises an alkoxylated polyalkyleneimine, more preferably comprises polyethyleneimine and even more preferably it is an ethoxylated polyethyleneimine. Preferably the composition of the invention comprises from 0.1% to about 5%, preferably from about 0.2% to about 3% by weight of the composition of the polyalkyleneimine. Compositions comprising an alkoxylated polyalkyleneimine further contribute to drying and shine, in particular when the aloxylated polyalkyleneimine comprising an alkoxylated polyalkyleneimine said alkoxylated polyalkyleneimine comprising a polyalkyleneimine backbone, alkoxy chains and quaternization groups wherein the alkoxylated polyalkyleneimine has a degree of quaternization of from 40% to 98% and wherein:

i) the polyalkyleneimine backbone represents from 1% to 40% by weight of the alkoxylated polyalkyleneimine;

ii) the alkoxy chains represent from 60% to 99% by weight of the alkoxylated polyalkyleneimine.

The alkoxylation of the polyalkyleneimine backbone comprises one or two alkoxylation modifications in a nitrogen atom, depending on whether the modification occurs at an internal nitrogen atom or at a terminal nitrogen atom in the polyalkyleneimine backbone, the alkoxylation modification involves the replacement of a hydrogen atom in a polyalkyleneimine by a monoalkoxylene or a polyalkoxylene chain preferably having an average of from about 1 to about 50 alkoxy units, wherein the terminal alkoxy unit of the polyalkoxylene chain is capped with hydrogen, C1-C4 alkyl or mixtures thereof. In addition, each nitrogen atom in the alkoxylated polyalkyleneimine may carry saturated or unsaturated, linear or branched alkyl, alkylaryl or aryl substituents, or combinations thereof, preferably benzyl substituents and/or C1-C12, preferably C1-C4 alkyl, aryl or alkylaryl substituents, resulting in neutral or cationic charge on each nitrogen atom depending on its total number of substituents. These modifications may result in permanent quaternization of polyalkyleneimine backbone nitrogen atoms. The degree of permanent quaternization is at least 5%, preferably at least 20%, more preferably from at least from 40% to 100% of the polyalkyleneimine backbone nitrogen atoms.

Preferably, all the nitrogen atoms would comprise alkoxylation modification(s) although it might be possible to have polyalkyleneimines wherein only part of the nitrogen atoms have been alkoxylated.

Examples of possible modifications are herein shown, the modifications correspond to terminal nitrogen atoms in the polyethyleneimine backbone where R represents an ethylene spacer and E represents a $C_1$- $C_{12}$ alkyl unit and $X^-$ represents a suitable water soluble counterion, such as chlorine, bromine or iodine, sulphate (i.e. -O-SO3H or -O-SO3-), alkylsulfonate such as methylsulfonate, arylsulfonate such as tolylsulfonate, and alkyl sulphate, such as methosulphate (i.e. -O-SO2-OMe)).

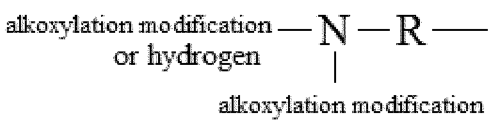

or

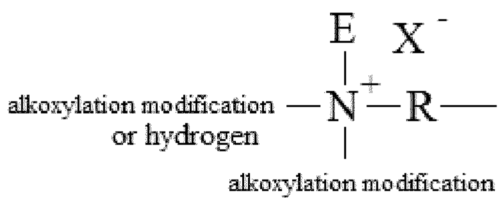

Examples of possible modifications are shown, the modifications correspond to internal nitrogen atoms in the polyethyleneimine backbone where R represents an ethylene spacer and E represents a $C_1$- $C_{12}$ alkyl unit and X- represents a suitable water soluble counterion.

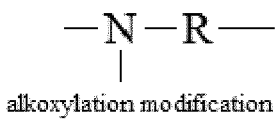

or

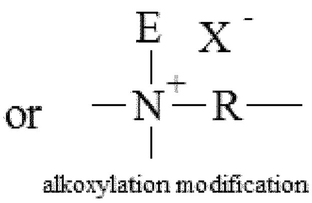

Also, for example, but not limited to, below is shown possible modifications to internal nitrogen atoms in the polyethyleneimine backbone where R represents an ethylene spacer and E represents a $C_1$-$C_{12}$ alkyl unit and X- represents a suitable water soluble counterion.

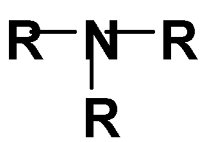

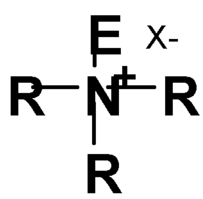

The alkoxylation modification of the polyalkyleneimine backbone may comprise the replacement of a hydrogen atom by a polyalkoxylene chain having an average of about 1 to about 50 alkoxy units, preferably from about 2 to about 40 alkoxy units, more preferably from about 3 to about 30 units and especially from about 3 to about 20 alkoxy units. The alkoxy units are preferably selected from ethoxy (EO), 1,2-propoxy (1,2-PO), butoxy (BO), and combinations thereof. Preferably, the polyalkoxylene chain is selected from ethoxy units and a combination of ethoxy and propoxy units. More preferably, the polyalkoxylene chain comprises ethoxy units in an average degree of from about 1 to about 50, more preferably from about 2 to about 40 and especially from about 3 to 20. Polyalkyleneimines comprising this degree of

ethoxy units have been found to provide best performance in terms of removal of bleachable stains, in particular tea and coffee stains. Also preferred in terms of bleachable stain removal are polyalkoxylene chains comprising a mixture of ethoxy and propoxy chains, preferably the polyalkoxylene chain comprises ethoxy units in an average of from about 1 to about 30 and more preferably propoxy units in an average degree of from about 0 to about 10, more preferably from about 2 to about 20 ethoxy units and from about 1 to about 10 propoxy units.

An example of a preferred alkoxylated polyethyleneimine has the general structure of formula (I) or a quaternized version (II):

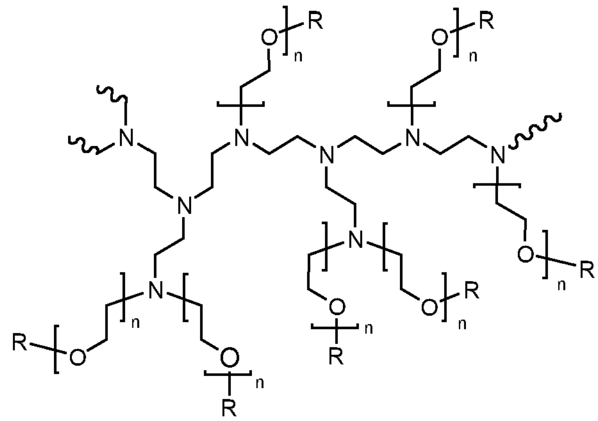

Formula (1) – non-quaternized

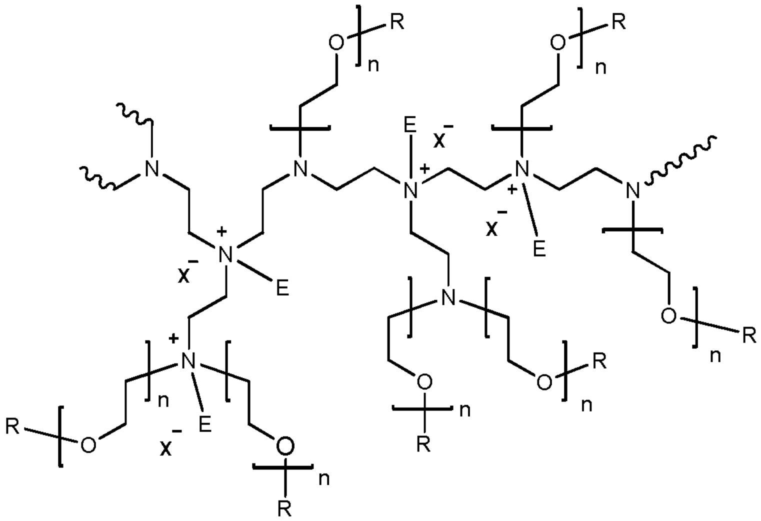

formula (II) - quaternized

wherein the polyethyleneimine backbone has a weight average molecular weight of from about 600 to about 5000 g/mole, n of formula (I) or (II) has an average of 3 to 20 and R of formula (I) is selected from hydrogen, a $C_1$-$C_4$ alkyl or benzyl, and mixtures thereof. The degree of quaternization of the polyalkyleneimine backbone of formula (II) may be at least 5%, more preferably at least 20% and especially 70% or higher of the polyalkyleneimine backbone nitrogen atoms.

Another preferred polyethyleneimine has the general structure of formula (III), with the quaternized version shown as formla (IV):

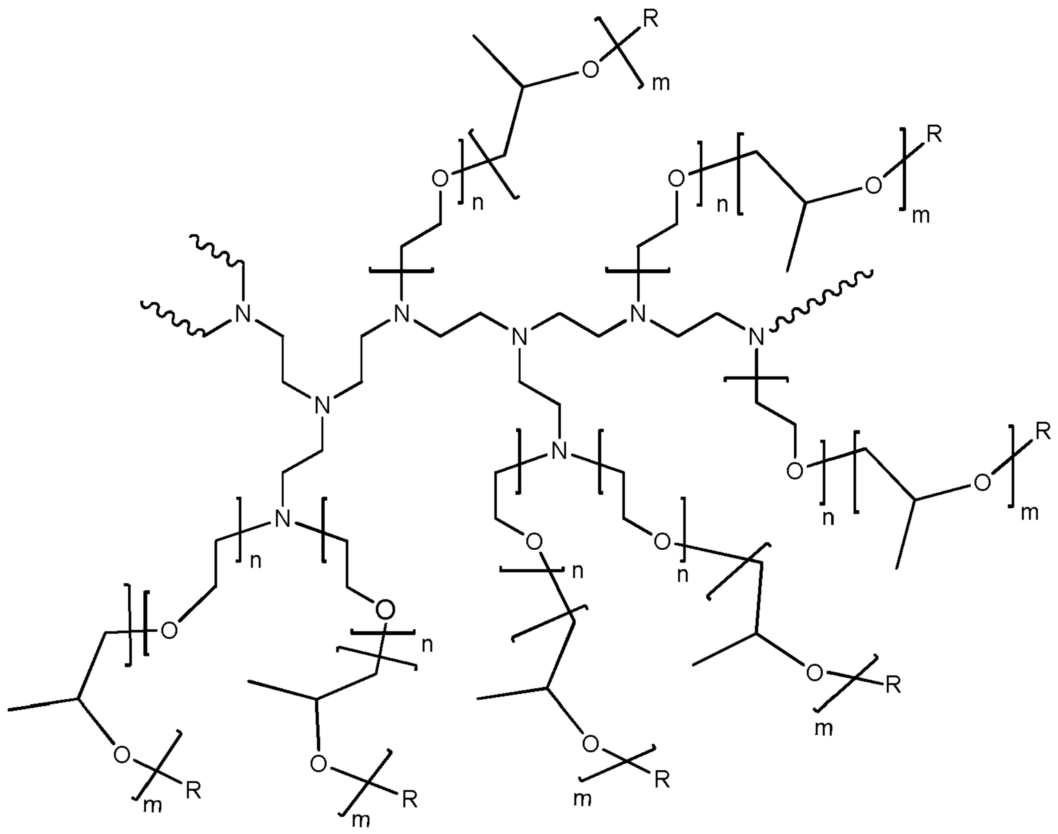

formula (III)

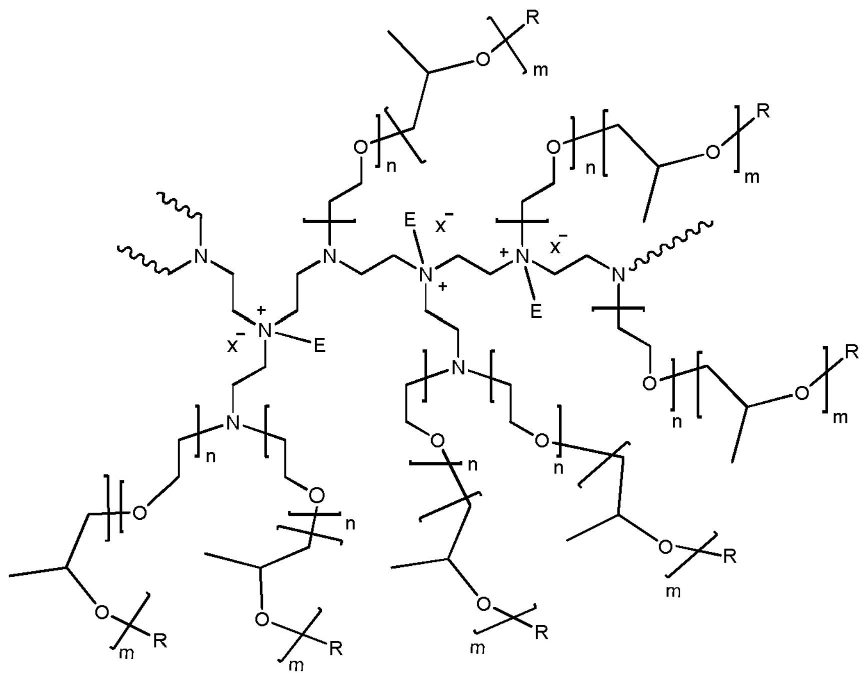

formula (IV) - quaternized

wherein the polyethyleneimine backbone has a weight average molecular weight of from about 600 to about 5000 g/mole,

n of formulas (III) and (IV) has an average of 7, m of formulas (III) and (IV) have an average of 1 and R of formula (III) and (IV) is selected from hydrogen, a $C_1$-$C_4$ alkyl and mixtures thereof. The degree of permanent quaternization of formula (IV)) may be from 5% to 100%, preferably at least 10%, more preferably at least 20% of the polyethyleneimine backbone nitrogen atoms.

Polyalkyleneimines suitable for the composition of the invention can be prepared, for example, by polymerizing ethyleneimine in the presence of a catalyst such as carbon dioxide, sodium bisulfite, sulfuric acid, hydrogen peroxide, hydrochloric acid, acetic acid, and the like.

The alkoxylated polyalkylenimines may be prepared in a known manner by reaction of polyalkylene imines with alkoxy units, the process would herein be described for the ethoxylation of polyoxyethyleneimine.

One preferred procedure consists in initially undertaking only an incipient ethoxylation of the polyalkylene imine in a first step. In this step, the polyalkylene imine is reacted only with a portion of the total amount of ethylene oxide used, which corresponds to about 1 mol of ethylene oxide per mole of NH unit. This reaction is undertaken generally in the absence of a catalyst in an aqueous solution at a reaction temperature from about 70 to about 200°C and preferably from about 80 to about 160°C. This reaction may be affected at a pressure of up to about 10 bar, and in particular up to about 8 bar.

In a second step, the further ethoxylation is then undertaken by subsequent reaction with the remaining amount of ethylene oxide. The further ethoxylation is undertaken typically in the presence of a basic catalyst. Examples of suitable catalysts are alkali metal and alkaline earth metal hydroxides such as sodium hydroxide, potassium hydroxide and calcium hydroxide, alkali metal alkoxides, in particular sodium and potassium $C_1$-$C_4$-alkoxides, such as sodium methoxide, sodium ethoxide and potassium tert-butoxide, alkali metal and alkaline earth metal hydrides such as sodium hydride and calcium hydride, and alkali metal carbonates such as sodium carbonate and potassium carbonate. Preference is given to the alkali metal hydroxides and the alkali metal alkoxides, particular preference being given to potassium hydroxide and sodium hydroxide. Typical use amounts for the base are from 0.05 to 10% by weight, in particular from 0.5 to 2% by weight, based on the total amount of polyalkyleneimine and alkylene oxide.

The further ethoxylation may be undertaken in substance (variant a)) or in an organic solvent (variant b)). In variant a), the aqueous solution of the incipiently ethoxylated polyalkylenimine obtained in the first step, after addition of the catalyst, is initially dewatered. This can be done in a simple manner by heating to from about 80 to about 150°C and distilling off the water under a reduced pressure of from about 0.01 to about 0.5 bar. The subsequent reaction with the ethylene oxide is effected typically at a reaction temperature from about 70 to about 200°C and preferably from about 100 to about 180°C. The subsequent reaction with the alkylene oxide is effected typically at a pressure of up to about 10 bar and in particular up to 8 bar. The reaction time of the subsequent reaction with the ethylene oxide is generally about 0.5 to about 4 hours.

Suitable organic solvents for variant b) are in particular nonpolar and polar aprotic organic solvents. Examples of particularly suitable nonpolar aprotic solvents include aliphatic and aromatic hydrocarbons such as hexane, cyclohexane, toluene and xylene. Examples of particularly suitable polar aprotic solvents are ethers, in particular cyclic ethers such as tetrahydrofuran and dioxane, N,N-dialkylamides such as dimethylformamide and dimethylacetamide, and N-alkyllactams such as N-methylpyrrolidone. It is of course also possible to use mixtures of these organic solvents. Preferred organic solvents are xylene and toluene.

In variant b), the solution obtained in the first step, after addition of catalyst and solvent, is initially dewatered, which is advantageously done by separating out the water at a temperature of from about 120 to about 180°C, preferably supported by a gentle nitrogen stream. The subsequent reaction with the alkylene oxide may be effected as in variant a). In variant a), the alkoxylated polyalkylenimine is obtained directly in substance and may be converted if desired to an aqueous solution. In variant b), the organic solvent is typically removed and replaced by water. The products may, of course, also be isolated in substance.

The quaternization of alkoxylated polyethyleneimines is achieved preferably by introducing $C_1$-$C_{12}$ alkyl, aryl or alkylaryl groups and may be undertaken in a customary manner by reaction with corresponding alkyl-, alkylaryl- halides and dialkylsulfates, as described for example in WO2009060059.

The quaternization of ethoxylated polyethyleneimines is achieved preferably by reacting the amines with at least one alkylating compound, which is selected from the compounds of the formula EX, wherein E is C1-C12 alkyl, aryl or alkyl and X is a leaving group, which is capable of being replaced by nitrogen (and C2-C6 alkylene oxide, especially ethylene oxide or propylene oxide).

Suitable leaving groups X are halogen, especially chlorine, bromine or iodine, sulphate (i.e. -O SO3H or -O SO3-), alkylsulfonate such as methylsulfonate, arylsulfonate such as tolylsulfonate, and alkyl sulphate, such as methosulphate (i.e. -O SO2 OMe). Preferred alkylating agents EX are C1-C12 alkyl halides, bis (C1-C12-alkyl)sulfates, and benzyl halides. Examples of such alkylating agents are ethyl chloride, ethyl bromide, methyl chloride, methyl bromide, benzyl chloride, dimethyl sulphate, diethyl sulphate.

The amount of alkylating agent determines the amount of quaternization of the amino groups in the polymer. The amount of the quaternization can be calculated from the difference of the amine number in the non-quaternized

amine and the quaternized amine.

The amine number can be determined according to the method described in DIN 16945.

The reaction can be carried out without any solvent, however, a solvent or diluent like water, acetonitrile, dimethylsulfoxide, N-Methylpyrrolidone, etc. may be used. The reaction temperature is usually in the range from 10°C to 150°C and is preferably from 50°C to 110°C.

All molecular weights related to the alkoxylated polyalkyleneimine of the composition of the invention are weight-average molecular weights expressed as grams/mole, unless otherwise specified. The molecular weight can be measured using gel permeation chromatography. As described on EP 2 662 436 A1.

Crystal growth inhibitor

Crystal growth inhibitors are materials that can bind to calcium carbonate crystals and prevent further growth of species such as aragonite and calcite.

Especially preferred crystal growth inhibitor for use herein is HEDP (1-hydroxyethylidene 1,1-diphosphonic acid). Preferably, the composition of the invention comprises from 0.01 to 5%, more preferably from 0.05 to 3% and especially from 0.5 to 2% of a crystal growth inhibitor by weight of the product, preferably HEDP.

Metal Care Agents

Metal care agents may prevent or reduce the tarnishing, corrosion or oxidation of metals, including aluminium, stainless steel and non-ferrous metals, such as silver and copper. Preferably the composition of the invention comprises from 0.1 to 5%, more preferably from 0.2 to 4% and especially from 0.3 to 3% by weight of the product of a metal care agent, preferably the metal care agent is benzo triazole (BTA).

Glass Care Agents

Glass care agents protect the appearance of glass items during the dishwashing process. Preferably the composition of the invention comprises from 0.1 to 5%, more preferably from 0.2 to 4% and specially from 0.3 to 3% by weight of the composition of a metal care agent, preferably the glass care agent is a zinc containing material, specially hydrozincite.

The automatic dishwashing composition of the invention preferably has a pH as measured in 1% weight/volume aqueous solution in distilled water at 20°C of from about 9 to about 12, more preferably from about 10 to less than about 11.5 and especially from about 10.5 to about 11.5.

The automatic dishwashing composition of the invention preferably has a reserve alkalinity of from about 10 to about 20, more preferably from about 12 to about 18 at a pH of 9.5 as measured in NaOH with 100 grams of product at 20°C.

Preferably, the composition of the invention comprises:

i) from 0.5 to 5% by weight of the composition of the terpolymer;
ii) from 0.5 to 20% by weight of the composition of non-ionic surfactant;
iii) from 5 to 50% by weight of the composition of a complexing agent, preferably the complexing agent comprises a salt of MGDA;
iv) enzymes, preferably an amylase and a protease;
v) optionally from 0.5 to 15% by weight of the composition of a dispersant polymer, preferably a carboxylate/sulfonate polymer;
vi) optionally from 5 to 25% by weight of the composition of bleach and more preferably a bleach catalyst;

Preferably, the composition of the invention comprises:

i) from 0.5 to 5% by weight of the composition of the terpolymer;

ii) from 0.5 to 10% by weight of the composition of non-ionic surfactant;

iii) from 5 to 50% by weight of the composition of a builder;

iv) from 5 to 50% by weight of the composition of a complexing agent, preferably the complexing agent comprises a salt of MGDA;

v) enzymes, preferably an amylase and a protease;

vi) from 0.5 to 5% by weight of the composition of a dispersant polymer, preferably a carboxylate/sulfonate polymer;

vii) optionally from 5 to 25% by weight of the composition of bleach and more preferably a bleach catalyst;

viii) a crystal growth inhibitor; and

ix) optionally but preferably an alkoxylated polyalkyleneimine comprising a polyalkyleneimine backbone, alkoxy chains and quaternization groups wherein the alkoxylated polyalkyleneimine has a degree of quaternization of from 40% to 98% and wherein:

i) the polyalkyleneimine backbone represents from 1% to 40% by weight of the alkoxylated polyalkyleneimine;

ii) the alkoxy chains represent from 60% to 99% by weight of the alkoxylated polyalkyleneimine.

Automatic dishwashing method

The automatic dishwashing method of the invention delivers the composition of the invention in the main wash cycle (herein also referred to as "main wash") of a dishwasher. An automatic dishwashing operation (herein also referred to as "automatic dishwashing process") typically comprises three or more cycles: a pre-wash cycle, a main-wash cycle and one or more rinse cycles, these cycles are usually followed by a drying cycle. The cleaning composition used in the present invention is to be delivered into the main wash. The improved drying benefit is to be noted at the end of the drying cycle.

Example 1 (not according to the invention)

Two automatic dishwashing compositions were made as detailed herein below.

I. Preparation of Test Compositions

Composition 1: 14.5 grams of an automatic dishwashing compositions were prepared. The composition comprises 0.89 grams of Marlipal® O13/70 (non-ionic surfactant supplied by Sasol) and 0.84 grams of Plurafac® SLF180 (non-ionic surfactant supplied by BASF). Composition 2, additionally comprises 0.5 g of Styleze 2000 (polymer supplied by Ashland). The grams are given as gram active.

II. Test Items

The following items were sourced and added to each automatic dishwasher

| Test Item | Supplier | Description | Number of Replicates added and position in machine |
|---|---|---|---|
| Dallas Glass | Muller NV | Article number 802002 | 2<br>top rack, opposite corners |
| Polypropylene polystyrene rectangular container | Colruyt | Amuse basic meat box | 1<br>top rack |
| Polypropylene round container | Carrefour | Coolness box 0.5L | 1<br>top rack |
| Polypropylene standard container | Variapack | Prestipack Combi BCS900 | 2<br>1x top rack, 1× bottom rack |
| Plastic SAN tumbler | US Acrylic | Article number 9273 | 2 |
| | | | top rack, opposite corners |

(continued)

| Test Item | Supplier | Description | Number of Replicates added and position in machine |
|---|---|---|---|
| Black ceramic plate | La table d'arc | Article number 0883314080193 | 2<br>bottom rack, back |
| Knife | Alto Autlet NV | Couteau table ingres ET 1700-5 | 2<br>cutlery tray |
| Stainless Steel Pan | Ikea | ANNONS | 2<br>Bottom rack |

III. Additional Ballast Soil 1

To add extra soil stress to the test, a blend of soils is added to the dishwasher, as prepared by the procedure described below:

| Ingredient | % content |
|---|---|
| Vegetable oil | 31.6 |
| Margarine | 6.3 |
| Lard | 6.3 |
| Deep-frying fat | 6.3 |
| Whole egg | 15.8 |
| Cream | 9.4 |
| Whole Milk | 6.3 |
| Potato Starch | 2.2 |
| Gravy | 1.7 |
| Wheat Flour | 0.6 |
| Quark Powder | 0.6 |
| Benzoic Acid >99% | 0.3 |
| Tomato Ketchup | 6.3 |
| Mustard | 6.3 |
| Total | 100 |

Soil Preparation

1. Combine the vegetable oil and whole egg and mix thoroughly (approximately 30 minutes).
2. Add ketchup and mustard, still stirring vigorously.
3. Melt the fats, allow to cool to approximately 40°C, then add to the mixture and blend well.
4. Stir in the cream and milk.
5. Add the powdered solid constituents and mix everything to a smooth paste.
6. Put 50g of the soil mix into plastic pots and freeze.

IV. Test wash procedure

| | |
|---|---|
| Automatic Dishwasher: | Beko, model DFN05311W |
| Wash volume: | 5000 ml |
| Main Wash Water temperature: | 35°C (Mini cycle) |
| Water hardness: | 21 gpg |
| Main Wash Composition addition: | Added into the bottom of the automatic dishwasher when the detergent dispenser opens at the start of the main wash. |
| Additional soil stress: | 1x 50g pot of additional ballast soil I (frozen) added to bottom rack. |

Example 1 (not according to the invention)

A dishwasher was loaded with the items as detailed above which were washed using Composition 1 and Composition 2. After running 4 consecutive cycles, the items are visually graded for dryness on a scale of 0 - 100% where 100% is completely dry. Averages are done from 2 graders, grading after each cycle.

| | Composition 1 | Composition 2 |
|---|---|---|
| Dallas Glass | 75 | 89 |
| Polypropylene polystyrene rectangular container | 46 | 68 |
| Polypropylene round container | 44 | 62 |
| Stainless Steel Pan | 82 | 99 |
| Plastic SAN tumbler | 40 | 74 |
| Black ceramic plate | 95 | 99 |
| Knife | 98 | 100 |

Example 2 (not according to the invention)

A dishwasher was loaded with the items as detailed above which were washed using Composition 1 and Composition 2. After running 4 consecutive cycles, the plastic tumblers and Dallas glasses were then photographed against a black background and the images were analysed using computer aided software. The image produced is analysed versus the greyscale and assigned a number to indicate the average transmission of light through the same. The whiter the image, the lower the transmission of light through the sample, the more black the image, the higher the transmission of light through the sample. The number is converted to a percentage scale and called % Clarity. A clarity difference of 2 is significant.

$$\%\ clarity = 100 - ((Average\ Grey\ Scale\ Value/255)*100)$$

A spot is defined as a circular cluster larger than 4 pixels with higher gray scale (4 units) versus the background, while grit is defined as a circular cluster smaller than 4 pixels with higher gray scale (4 units) versus the background.

| Item | Dallas Glass | | | Plastic SAN tumbler | | |
|---|---|---|---|---|---|---|
| | Clarity (%) | Spot Count | Grit Count | Clarity (%) | Spot Count | Grit Count |
| Composition 1 | 94.2 | 146 | 289.5 | 86.7 | 362 | 484 |
| Composition 2 | 94.1 | 94.5 | 194 | 85.4 | 169 | 396 |

As it can be seen from the table above, composition 2 reduces the number of spot and the amount of grit on both glasses and plastic tumblers.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. An automatic dishwashing cleaning composition comprising a terpolymer comprising (meth)acrylic acid, linear or branched C1-C20 alkyl (meth)acrylate and vinylpyrrolidone; and a non-ionic surfactant, and wherein the composition further comprising enzymes.

2. A composition according to claim 1 wherein the terpolymer comprises:

   i) from 1 to 55% by weight of the terpolymer of (meth)acrylic acid;
   ii) from 1 to 25% by weight of the terpolymer of linear or branched C1-C20 alkyl (meth)acrylate; and
   iii) from 20 to 90% by weight of the terpolymer of vinylpyrrolidone.

3. A composition according to claim 1 wherein the terpolymer comprises:

   i) from 15 to 40% by weight of the terpolymer of (meth)acrylic acid;
   ii) from 5 to 20% by weight of the terpolymer of linear or branched C1-C20 alkyl (meth)acrylate; and
   iii) from 40 to 70% by weight of the terpolymer of vinylpyrrolidone.

4. A composition according to any of the preceding claims wherein the terpolymer comprises vinylpyrrolidone, acrylate and lauryl methacrylate.

5. A composition according to any of the preceding claims wherein the terpolymer has a weight average molecular weight of from about 10000 $gmol^{-1}$ to about 2000000 $gmol^{-1}$.

6. A composition according to any of the preceding claims wherein the composition is phosphate free.

7. A composition according to any of the preceding claims wherein the non-ionic surfactant is a surfactant system comprising at least two non-ionic surfactants and preferably at least one of the non-ionic surfactants comprises from 5 to 25 moles of ethylene oxide per mole of surfactant.

8. A composition according to any of the preceding claims further comprising an alkoxylated polyalkyleneimine said alkoxylated polyalkyleneimine comprising a polyalkyleneimine backbone, alkoxy chains and quaternization groups wherein the alkoxylated polyalkyleneimine has a degree of quaternization of from 40% to 98% and wherein:

   i) the polyalkyleneimine backbone represents from 1% to 40% by weight of the alkoxylated polyalkyleneimine;
   ii) the alkoxy chains represent from 60% to 99% by weight of the alkoxylated polyalkyleneimine.

9. A composition according to any preceding claim further comprising a dispersant polymer, preferably a carboxylated/sulfonated polymer.

10. A composition according to any preceding claim wherein the composition comprises bleach and a preferably manganese bleach catalyst.

11. A composition according to any preceding claim wherein the composition comprises a crystal growth inhibitor, preferably 1-hydroxyethylidene 1,1-diphosphonic acid.

12. A composition according to any preceding claim comprising:

   i) from 0.5 to 5% by weight of the composition of the terpolymer;
   ii) from 0.5 to 20% by weight of the composition of non-ionic surfactant;
   iii) from 5 to 50% by weight of the composition of a complexing agent;
   iv) enzymes;
   v) from 0.5 to 15% by weight of the composition of a dispersant polymer;
   vi) optionally from 5 to 25% by weight of the composition of bleach.

13. A method of providing drying through the wash in a dishwasher comprising the step of delivering into the main wash of the dishwasher a composition according to any of the preceding claims.

**14.** Use of a composition according to any of claims 1 to 12 to provide drying through the wash in automatic dishwashing.

**Patentansprüche**

**1.** Maschinen-Geschirrspülreinigungszusammensetzung, umfassend ein Terpolymer, umfassend (Meth)acrylsäure, lineares oder verzweigtes C1-C20-Alkyl(meth)acrylat und Vinylpyrrolidon; und ein nichtionisches Tensid, und wobei die Zusammensetzung ferner Enzyme umfasst.

**2.** Zusammensetzung nach Anspruch 1, wobei das Terpolymer umfasst:

i) von 1 bis 55 Gew.-% des Terpolymers (Meth)acrylsäure;
ii) von 1 bis 25 Gew.-% des Terpolymers lineares oder verzweigtes C1-C20-Alkyl(meth)acrylat; und
iii) von 20 bis 90 Gew.-%, des Terpolymers Vinylpyrrolidon.

**3.** Zusammensetzung nach Anspruch 1, wobei das Terpolymer umfasst:

i) von 15 bis 40 Gew.-% des Terpolymers (Meth)acrylsäure;
ii) von 5 bis 20 Gew.-% des Terpolymers lineares oder verzweigtes C1-C20-Alkyl(meth)acrylat; und
iii) von 40 bis 70 Gew.-% des Terpolymers Vinylpyrrolidon.

**4.** Zusammensetzung nach einem der vorstehenden Ansprüche, wobei das Terpolymer Vinylpyrrolidon, Acrylat und Laurylmethacrylat umfasst.

**5.** Zusammensetzung nach einem der vorstehenden Ansprüche, wobei das Terpolymer ein durchschnittliches Molekulargewicht von etwa 10000 $gmol^{-1}$ bis etwa 2000000 $gmol^{-1}$ aufweist.

**6.** Zusammensetzung nach einem der vorstehenden Ansprüche, wobei die Zusammensetzung phosphatfrei ist.

**7.** Zusammensetzung nach einem der vorstehenden Ansprüche, wobei das nichtionische Tensid ein Tensidsystem ist, umfassend wenigstens zwei nichtionische Tenside, und vorzugsweise wenigstens eines der nichtionischen Tenside von 5 bis 25 Mol Ethylenoxid pro Mol Tensid umfasst.

**8.** Zusammensetzung nach einem der vorstehenden Ansprüche, ferner umfassend ein alkoxyliertes Polyalkylenimin, das alkoxylierte Polyalkylenimin umfassend ein Polyalkyleniminingrundgerüst, Alkoxyketten und Quaternisierungsgruppen, wobei das alkoxylierte Polyalkylenimin einen Quaternisierungsgrad von 40 % bis 98 % aufweist und wobei:

i) das Polyalkyleniminingrundgerüst von 1 Gew.-% bis 40 Gew.-% des alkoxylierten Polyalkylenimins darstellt;
ii) die Alkoxyketten von 60 Gew.-% bis 99 Gew.-% des alkoxylierten Polyalkylenimins darstellen.

**9.** Zusammensetzung nach einem der vorstehenden Ansprüche, ferner umfassend ein Dispergierpolymer, vorzugsweise ein carboxyliertes/sulfoniertes Polymer.

**10.** Zusammensetzung nach einem der vorstehenden Ansprüche, wobei die Zusammensetzung Bleichmittel und einen vorzugsweise Mangan-Bleichkatalysator umfasst.

**11.** Zusammensetzung nach einem der vorstehenden Ansprüche, wobei die Zusammensetzung einen Kristallwachstumsinhibitor, vorzugsweise 1-Hydroxyethyliden-1,1-diphosphonsäure umfasst.

**12.** Zusammensetzung nach einem der vorstehenden Ansprüche, umfassend:

i) von 0,5 bis 5 Gew.-% der Zusammensetzung das Terpolymer;
ii) von 0,5 bis 20 Gew.-% der Zusammensetzung nichtionisches Tensid;
iii) von 5 bis 50 Gew.-% der Zusammensetzung einen Komplexbildner;
iv) Enzyme;
v) von 0,5 bis 15 Gew.-% der Zusammensetzung ein Dispergierpolymer;
vi) optional von 5 bis 25 Gew.-% der Zusammensetzung Bleichmittel.

**13.** Verfahren zum Bereitstellen eines Trocknens durch den Spülgang in einer Geschirrspülmaschine, umfassend den Schritt eines Abgebens einer Zusammensetzung nach einem der vorstehenden Ansprüche in den Hauptspülgang der Geschirrspülmaschine.

**14.** Verwendung einer Zusammensetzung nach einem der Ansprüche 1 bis 12, um das Trocknen durch den Spülgang in einem automatischen Geschirrspülvorgang bereitzustellen.

## Revendications

**1.** Composition de nettoyage pour lave-vaisselle automatique comprenant un terpolymère comprenant de l'acide (méth)acrylique, du (méth)acrylate d'alkyle en C1 à C20 linéaire ou ramifié et de la vinylpyrrolidone ; et un agent tensioactif non ionique, et dans laquelle la composition comprend en outre des enzymes.

**2.** Composition selon la revendication 1, dans laquelle le terpolymère comprend :

i) de 1 à 55 %, en poids du terpolymère d'acide (méth)acrylique ;
ii) de 1 à 25 % en poids du terpolymère de (méth)acrylate d'alkyle en C1 à C20 linéaire ou ramifié ; et
iii) de 20 à 90 %, en poids du terpolymère de vinylpyrrolidone.

**3.** Composition selon la revendication 1, dans laquelle le terpolymère comprend :

i) de 15 à 40 %, en poids du terpolymère d'acide (méth)acrylique ;
ii) de 5 à 20 % en poids du terpolymère de (méth)acrylate d'alkyle en C1 à C20 linéaire ou ramifié ; et
iii) de 40 à 70 %, en poids du terpolymère de vinylpyrrolidone.

**4.** Composition selon l'une quelconque des revendications précédentes, dans laquelle le terpolymère comprend de la vinylpyrrolidone, de l'acrylate et du méthacrylate de lauryle.

**5.** Composition selon l'une quelconque des revendications précédentes, dans laquelle le terpolymère a une masse moléculaire moyenne en poids d'environ 10 000 $gmol^{-1}$ à environ 2 000 000 $gmol^{-1}$.

**6.** Composition selon l'une quelconque des revendications précédentes, dans laquelle la composition est exempte de phosphate.

**7.** Composition selon l'une quelconque des revendications précédentes, dans laquelle l'agent tensioactif non ionique est un système tensioactif comprenant au moins deux agents tensioactifs non ioniques et de préférence au moins l'un parmi les agents tensioactifs non ioniques comprend de 5 à 25 moles d'oxyde d'éthylène par mole de tensioactif.

**8.** Composition selon l'une quelconque des revendications précédentes comprenant en outre une polyalkylèneimine alcoxylée, ladite polyalkylèneimine alcoxylée comprenant un squelette polyalkylèneimine, des chaînes alcoxy et des groupes de quaternarisation, dans laquelle la polyalkylèneimine alcoxylée a un degré de quaternarisation allant de 40 % à 98 % et dans laquelle :

i) le squelette polyalkylèneimine représente de 1 % à 40 % en poids de la polyalkylèneimine alcoxylée ;
ii) les chaînes alcoxy représentent de 60 % à 99 % en poids de la polyalkylèneimine alcoxylée.

**9.** Composition selon l'une quelconque revendication précédente comprenant en outre un polymère dispersant, de préférence un polymère carboxylé/sulfoné.

**10.** Composition selon l'une quelconque revendication précédente, dans laquelle la composition comprend un agent de blanchiment et de préférence un catalyseur de blanchiment au manganèse.

**11.** Composition selon l'une quelconque revendication précédente, dans laquelle la composition comprend un inhibiteur de croissance cristalline, de préférence d'acide 1-hydroxyéthylidène 1,1-diphosphonique.

**12.** Composition selon l'une quelconque revendication précédente, comprenant :

i) de 0,5 à 5 % en poids de la composition du terpolymère ;
ii) de 0,5 à 20 % en poids de la composition d'agent tensioactif non ionique ;
iii) de 5 à 50 % en poids de la composition d'un agent complexant ;
iv) des enzymes ;
v) de 0,5 à 15 % en poids de la composition d'un polymère dispersant ;
vi) de 5 à 25 %, en poids de la composition d'agent de blanchiment.

**13.** Procédé de fourniture de séchage à travers le lavage dans un lave-vaisselle comprenant l'étape de distribution dans le lavage principal du lave-vaisselle d'une composition selon l'une quelconque des revendications précédentes.

**14.** Utilisation d'une composition selon l'une quelconque des revendications 1 à 12 pour fournir un séchage à travers le lavage dans un lavage-vaisselle automatique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008110816 A
- WO 2009033972 A
- WO 2009033830 A
- WO 2008119834 A
- WO 2009027456 A
- EP 2333039 A1
- WO 9100302 A1
- WO 9422800 A, Olin Corporation
- WO 0037627 A
- WO 08010925 A
- US 7153818 B
- WO 9700324 A
- EP 1022334 A
- US 5856164 A
- WO 9923211 A
- WO 9623873 A
- WO 0060060 A
- WO 06002643 A
- US 6093562 A
- WO 2009060059 A
- EP 2662436 A1